Europäisches Patentamt

European Patent Office

Office européen des brevets

(19)

(11) Publication number: **0 060 605**
**B1**

(12) **EUROPEAN PATENT SPECIFICATION**

(45) Date of publication of patent specification: 28.08.85

(51) Int. Cl.⁴: **A 01 B 33/06,** A 01 B 61/04

(21) Application number: **82200336.4**

(22) Date of filing: **17.03.82**

(54) Soil cultivating implements.

(30) Priority: 18.03.81 NL 8101312

(43) Date of publication of application:
22.09.82 Bulletin 82/38

(45) Publication of the grant of the patent:
28.08.85 Bulletin 85/35

(84) Designated Contracting States:
DE FR GB IT

(56) References cited:
AU-B- 124 777
GB-A-2 043 415
NL-A-7 411 643
NL-A-7 709 090
US-A-1 506 042
US-A-3 949 814

POWER FARMING, vol. 59, no. 11, December
1980, page 71, Sutton Surrey (GB); "High-speed
tillage train via the niae"

(73) Proprietor: C. van der Lely N.V.
Weverskade 10 P.O. Box 26
NL-3155 ZG Maasland (NL)

(72) Inventor: van der Lely, Cornelis
7 Brüschenrain
Zug (CH)

(74) Representative: Mulder, Herman et al
Octrooibureau Van der Lely N.V. Weverskade 10
P.O. Box 26
NL-3155 ZG Maasland (NL)

EP 0 060 605 B1

Courier Press, Leamington Spa, England.

## Description

This invention relates to soil cultivating implements or machines of the kind which comprises a frame movable over the ground and carrying a plurality of soil working members that are rotatable about upwardly extending axes, the soil working members being deflectable from their appointed working position, during the operation of the implement, against the action of springs, which tend to restore the soil working members to those appointed working positions pivotally mounted gear boxes being provided, containing members of a drive-transmission to the rotary soil working members and means that are engaged by the springs, said means being located rearwardly with respect to the intended direction of operative travel of the implement of said gear boxes, said means comprising pivotal linkages interconnecting the frame of the implement and the pivotally mounted gearboxes.

With the known construction (AU—B—124,777) as shown in Fig. 7, a compression spring is disposed between the end of a rod and a lug on a bracket. This means that when a soil working member is tilted rearwardly, the compression spring with its rear end abuts against the lug which forms a fixed point with respect to the frame of the machine. This means that the restoring action of the spring varies very greatly in dependency upon the extent of the deflection of the soil working member or members affected. This is in general undesirable, since if the springs are to maintain the soil working members very firmly in their appointed working positions, the magnitude of a force which will cause a large deflection therefrom, may be that great that bending or breakage will also occur. It is an object of the present invention to overcome or very significantly to reduce this disadvantage with the known soil cultivating implement and said aspect of the invention accordingly provides a soil cultivating implement of the kind set forth characterized in that each pivotal linkage comprises three interconnected pivots located at different horizontal levels, the uppermost and lowermost of the three pivots being disposed substantially vertically in register, whilst the intermediate pivot is disposed rearwardly thereof with respect to the intended direction of operative travel of the implement, one of said pivots being carried by the frame of the implement whilst the other pivot is carried by a corresponding one of the pivotably mounted gearboxes and the intermediate pivot of the pivotal linkage is engaged by a corresponding one of the restoring springs.

By means of this construction the position restoring force exerted by the springs on deflected soil working members, can be maintained substantially constantly throughout at least a major portion of the motion of any soil working member in order to restore that member from a significantly deflected position to its appointed working position.

For a better understanding of the invention, and to show how the same may be carried into effect, reference will now be made, by way of example, to the accompanying drawings, in which:—

Figure 1 is a plan view of a soil cultivating implement in accordance with the invention shown connected to the rear of an agricultural tractor,

Figure 2 is a side elevation, to an enlarged scale, as seen in the direction indicated by an arrow II in Figure 1,

Figure 3 is a section, to an enlarged scale, taken on the line III—III in Figure 1,

Figure 4 is a rear elevation, to an enlarged scale, of that part of the implement which lies between the arrows IV—IV in Figure 1, and

Figure 5 is a section, to a further enlarged scale, taken on the lines V—V in Figure 1.

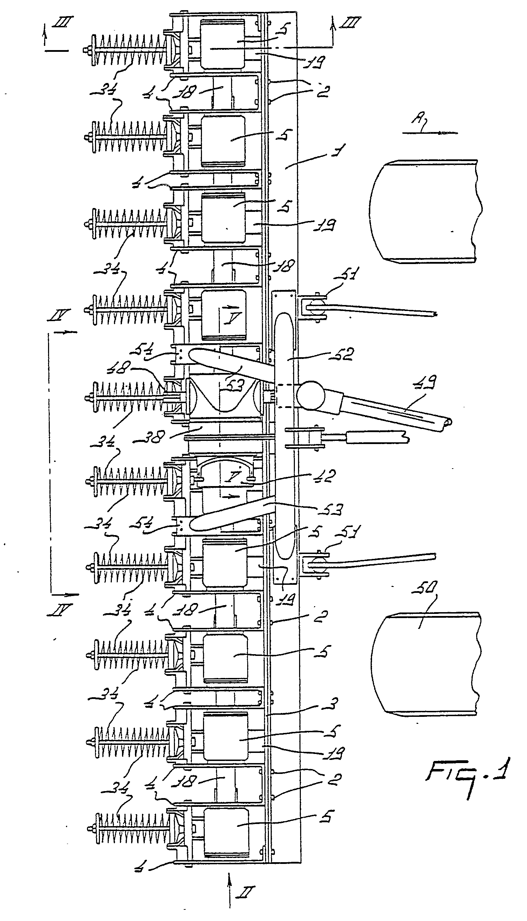

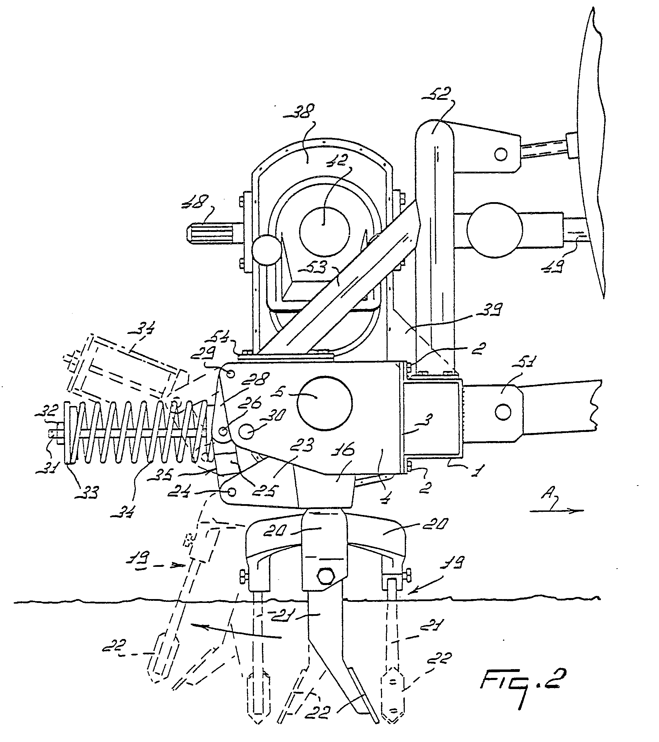

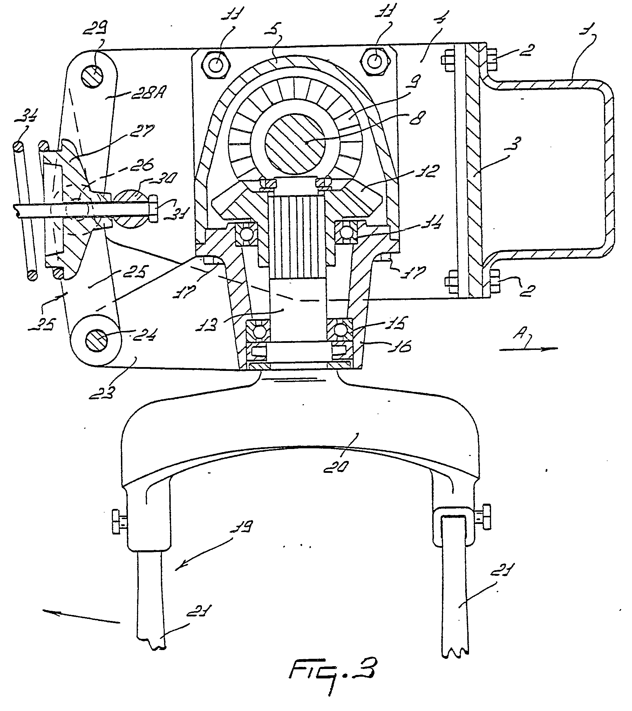

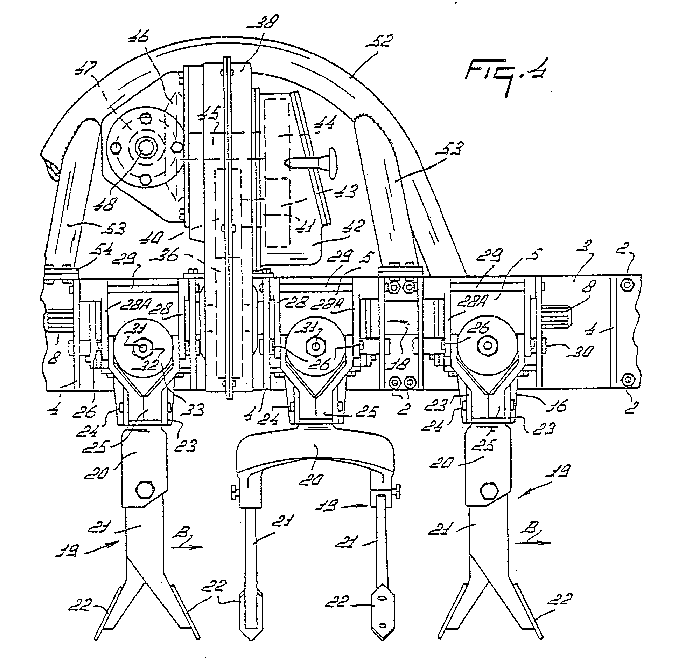

Referring to the accompanying drawings, the soil cultivating implement that is illustrated therein has a frame which comprises a main frame beam 1 that extends substantially horizontally transverse and usually, as illustrated, substantially horizontally perpendicular, to the intended direction of operative travel of the implement that is indicated in Figures 1 and 2 of the drawings by an arrow A. The beam 1 is formed from profiled sheet steel and has a channel-shaped cross-section which is so disposed (see Figures 2 and 3 of the drawings) that the parallel limbs of the channel are substantially horizontal whilst the interconnecting web or base thereof is substantially vertical, the latter being located foremost with respect to the direction A. The free edges of the upper and lower limbs of the main frame beam 1 are bent over upwardly and downwardly, respectively, through substantially 90° so as to be contained in a plane that is parallel to that of the web or base of the beam, the bent-over rims which are thus formed being firmly but releasably secured by horizontal bolts 2 to a substantially vertically disposed strengthening plate 3 which extends through the horizontal length (transverse to the direction A) of the beam 1 at the rear of that beam with respect to the same direction.

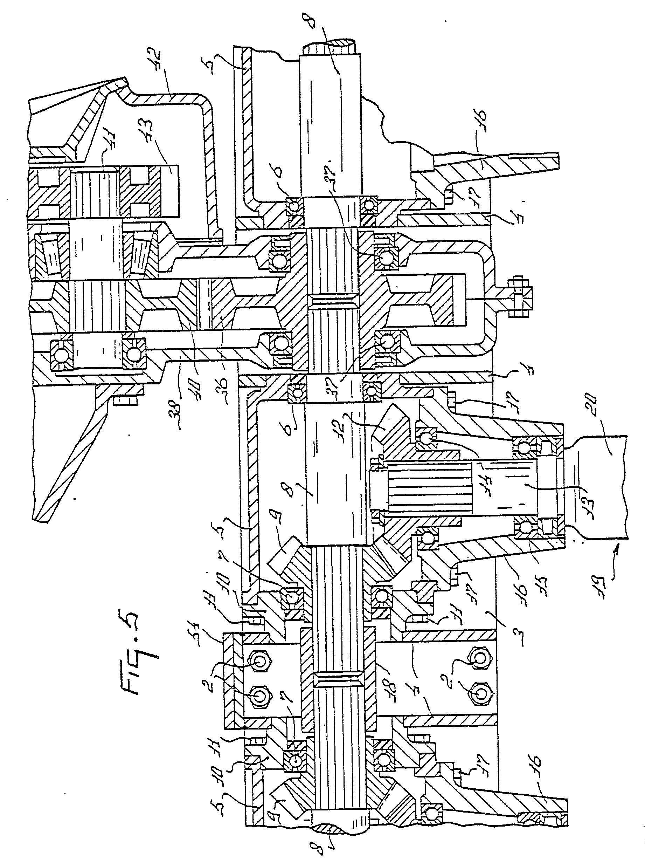

A plurality of support plates 4 are secured to the rear of the frame strengthening plate 3, each support plate 4 being parallel to its fellows and occupying an upwardly extending position which usually, as illustrated, will be a vertical position that is parallel or substantially parallel to the direction A. The support plates 4 all project rearwardly from the strengthening plate 3 with respect to the direction A, the two support plates 4 which are at the opposite ends of the main frame beam 1 being secured to that beam 1 and to the plate 3 by appropriately positioned bolts 2 which are entered through perpendicularly bent-over leading portions of the two support plates 4 concerned (see Figure 1). At locations between the opposite ends of the beam 1, the support plates 4 are arranged in pairs with each pair formed integrally from a single sheet of steel or other material but the arrangement being such that, as can be seen in Figure 1, the distance between the two plates 4 of each integral pair are alternately different along the length of the beam 1 with the spacing between the two plates 4 of a pair that are further apart from one another being substantially twice the spacing between the two plates 4 of a pair that are closer to one another. It can also be seen in Figure 1 of the drawings that, moving towards the centre of the main frame beam 1 from either of its opposite ends, the first integral pair of support plates 4 which is reached is a pair having the larger of the two alternately different spacings therebetween. Figures 2 and 3 of the drawings illustrate the shape of each support plate 4 and it will be apparent therefrom that said shape is basically oblong although the lower edge does not extend parallel to the upper edge throughout its length, having an upwardly and rearwardly (with respect to the direction A) sloping rear portion whose rearmost end meets the lower end of a downwardly and forwardly sloping rear edge of the plate 4 that is not parallel to the leading edge of the same plate which adjoins the rear surface of the frame strengthening plate 3. In the embodiment which is being described by way of example, there is a total of twenty of the plates 4 and, between alternate pairs of those plates 4, considered lengthwise along the main frame beam 1, corresponding gear boxes 5 are mounted, there thus being a total of ten of those gear boxes 5 in this embodiment. Each of the gear boxes 5 rotatably supports a corresponding substantially horizontal shaft 8 (Figure 5) between a pair of aligned ball bearings 6 and 7. The opposite ends of each shaft 8 project laterally beyond the gear box 5 concerned except that the two gear boxes 4 which are located at the opposite ends of the row of ten such gear boxes are provided with shorter shafts 8 that do not project inconveniently beyond the opposite ends of said row. The ten shafts 8 are in axial alignment with one another in a direction that is parallel to the length of the main frame beam 1, the opposite ends of each shaft 8 (except for the effectively excised ends of the two shafts 8 just referred to at the opposite ends of the row) being splined.

One set of splines on each shaft 8 is provided, inside the corresponding gear box 5, with a corresponding bevel pinion 9 having an internally splined hub which fits the splines of the portion of the shaft 8 with which it co-operates. The hub of each bevel pinion 9 is surrounded by the inner race of the corresponding ball bearing 7 whilst the outer race of that bearing 7 is received in a corresponding housing 10 that is releasably fastened to a wall of the gear box 5 concerned by horizontal bolts 11. The teeth of each bevel pinion 9 are in driving mesh with those of a further bevel pinion 12 that has an internally splined hub that surrounds a matchingly splined portion of an upwardly extending (non-horizontal) shaft 13, the shaft 13 being in perpendicular relationship with the corresponding shaft 8 and usually, as illustrated in full lines throughout the drawings, being vertically or substantially vertically disposed when the implement is in operation. Each shaft 13 is rotatably supported by a vertically spaced apart pair of upper and lower ball bearings 14 and 15, those bearings being mounted in a bearing housing 16 that is firmly but releasably maintained in its appointed position by vertical bolts 17 that cooperate with the bottom of the corresponding gear box 5. Portions of the side walls of the gear boxes 5 and of the bearing housings 10 which form parts thereof are pivotally received in aligned holes in the support plates 4, internally splined sleeves 18 being arranged around the opposed splined ends of each successive pair of aligned shafts 8 to enable drive to be transmitted from each shaft 8 to the next one along the row thereof.

It can be seen from Figures 1 and 5 of the drawings that the gear boxes 5 are arranged in successive pairs in each of which pairs the two gear boxes 5 are substantially symmetrically disposed with the result that, during operation of the implement, the corresponding two downwardly projecting shafts 13 will revolve in opposite directions in response to the drive which reaches them from the bevel pinions 9 and 12 concerned. Each shaft 13 is part of a corresponding rotary soil working member or rotor 19 that also comprises a carrier 20, disposed at the lowermost end of the shaft 13 concerned and having the shape of an arched bracket. The free ends of the two limbs of each carrier 20 are in the form of sockets, provided with pressure bolts, said socket receiving the upper ends of respective cultivating members 21. The sockets, and the ends of the cultivating members 21 which they receive, are of oblong cross-section so as to prevent the parts of the cultivating members 21 which are fastened in the sockets from being turnable therein. It can be seen in Figures 2 and 4 of the drawings that each cultivating member 21 extends substantially vertically downwards from the fastening part thereof that is received in the corresponding socket and is then inclined obliquely downwardly and forwardly with respect to the intended direction of operative rotation B of the soil working member 19 concerned, the lower leading edge of the oblique portion carrying a chisel blade 22 whose point is at a lower horizontal level than is the lowermost extremity of the member 21 to which it is releasably secured. It is noted that, when the lowermost point of one of the chisel blades 22 becomes blunt or is broken or otherwise damaged, the blade 22 concerned can be detached from the member 21 which carries it and then be replaced in an inverted position in which a fresh point of the blade 22 becomes effective. The effective life of each blade 22 is thus doubled before eventual replacement inevitably becomes necessary. The blades 22 are releasably secured to the members 21 by pairs of bolts, preferably having recessed heads, whose shanks extend into screwthreaded bores formed in the thickness of each member 21.

The rear of each gear box 5, with respect to the intended direction of operative travel A, carries a horizontally spaced apart pair of lugs 23 that both taper rearwardly away from the bearing housing 16 of said gear box 5. The rearmost ends of the two lugs 23 of each pair are interconnected by a horizontal pivot pin 24 that is parallel or substantially parallel to the length of the main frame beam 1. A bracket 25 is turnable about the pivot pin 24, between the two lugs 23, said bracket 25 being formed in two separate halves defining limbs which project upwardly in divergent relationship to merge into substantially parallel upper ends that are pivotally connected by aligned trunnion pins 26 to the opposite sides of a corresponding pressure member 27 whose arrangement will be further described below. The axis defined by each pair of trunnion pins 26 is substantially horizontally parallel to the length of the main frame beam 1.

The two trunnion pins 26 of each pair are turnably connected to the lowermost ends of corresponding substantially symmetrically identical arms 28 and 28A, these arms 28 and 28A both extending generally upwards from the lowermost ends thereof that are coupled to the respective trunnion pins 26 to have their uppermost ends turnably mounted on substantially horizontal shafts 29 that interconnect upper rear corners of the two support plates 4 which carry each gear box 5. The two support plates 4 of each pair that correspond to one of the gear boxes 5 are also interconnected, close to the lower rearmost corners thereof, by a relatively large diameter shaft 30 which, once again, extends substantially horizontally parallel to the length of the main frame beam 1. Each shaft 30 is formed at a location a short distance from its midpoint with a transverse bore through which is entered the shank of a corresponding long bolt or guide 31 in such a way that, normally, the head of the bolt 31 bears against the leading side of the shaft 30, with respect to the direction A, with the shank of the long bolt 31 extending rearwardly from the shaft 30 for a considerable distance in a direction that is substantially horizontally parallel to the direction A. Each long bolt 31 extends axially through the centre of the corresponding pressure member 27, a rearmost end region of its shank being screwthreaded and displaceably carrying a nut 32 against the leading side of which, with respect to the direction A, bears a stop washer 33 arranged in surrounding relationship with the shank of the long bolt 31. A helical compression spring 34 surrounds the shank of each long bolt 31 and bears between the pressure member 27 at its leading end and the stop washer 33 at its rear end. Each pressure member 27 is displaceable along the shank of the corresponding long bolt 31 but is urged forwardly along that shank, towards the head of the long bolt but actually against the rearmost curved surface of the corresponding shaft 30, by the corresponding spring 34. A pivotal linkage 35 is provided for each rotary soil working member 19 and the corresponding gear box 5 and comprises the bracket 25, the arms 28 and 28A, the pivot pins 24 and shafts 29 that are located substantially vertically one above the other and the trunnion pins 26 which are disposed a short distance to the rear, with respect to the direction A, as compared with the pivot pins 24 and substantially horizontal shafts 29.

It is particularly clear from Figures 2 and 3 of the drawings that each rotary soil working member 19, together with the corresponding gear box 5, is turnable rearwardly with respect to the direction A, and upwardly to some extent, about the longitudinal axis of the corresponding shaft 8 against the action of the respective compression spring 34 which spring 34 normally maintains the operative position that is shown in Figure 3 of the drawings and in full lines in Figure 2 by resiliently sustaining the illustrated disposition of the pivotal linkage 35 concerned so that the gear box 5 cannot turn angularly about its shaft 8 until the corresponding soil working member 19 meets such a resistance to its continued progress in the direction A that the action of the spring 34 is overcome enabling the soil working member 19 to turn bodily rearwards, and upwards to some extent, about said shaft 8 in the direction indicated by arrows adjacent the lower left-hand corners of Figures 2 and 3 of the drawings.

The internally splined sleeve 18 that interconnects the splined ends of the two shafts 8 which correspond to the two gear boxes 5 which are immediately alongside the centre of the implement is embodied in the hub of a straight-toothed or spur-toothed pinion 36 (Figures 4 and 5), the internally splined hub concerned being rotatably mounted by a pair of substantially horizontally aligned ball bearings 37 in the walls of part of a central gear box 38 of the implement. This part of the central gear box 38 is located between the two support plates 4 of a relatively widely spaced integral pair thereof, the remainder of the central gear box 38 being located at a higher horizontal level than those support plates 4 and being secured to the main frame beam 1 by supports 39 (Figure 2). The teeth of the pinion 36 are in driven mesh with those of a slightly smaller pinion 40 carried by a splined portion of a rotatably mounted shaft 41 that is parallel to the combined length of the shafts 8 and to the length of the main frame beam 1. One end of the shaft 41 projects from one side of the central gear box 38 into the housing of a change-speed gear 42 located at the same side of said central gear box 38. The projecting end of the shaft 41 is splined as is the similarly projecting end of a parallel shaft 45 (Figure 4) which is located at a higher level in the central gear box 38 and the change-speed gear 42. The housing of the change-speed gear 42 has a readily removable cover (Figures 2 and 4 of the drawings) that is releasably retained in its closing position in any simple known way such as that shown in the drawings. When the cover is opened, access is obtained to the splined ends of the two shafts 41 and 45 which project into the housing of the change-speed gear 42 and this enables a chosen pair of pinions of different sizes, such as the smaller pinion 43 on the shaft 41 and the larger pinion 44 on the shaft 45 that are illustrated, to be employed to obtain a corresponding transmission ratio between the shafts 45 and 41. Preferably, a number of pairs of pinions of different sizes, such as the pair 43 and 44, is provided, the two pinions in a single pair being interchangeable on the shaft ends and each pair being exchangeable for another pair in which the two pinions are of different sizes.

A bevel pinion 46 mounted on the shaft 45 inside the central gear box 38 has its teeth in driven mesh with those of a further bevel pinion 47 carried by a rotary input shaft 48 of the implement which has splined ends which project both forwardly from the front of the central gear box 38 with respect to the direction A and rearwardly from the back thereof, only the rear splined end thereof actually being visible in Figure 2 of the drawings whilst both splined ends thereof can be seen in Figure 1. The shaft 48 constitutes a rotary input shaft of the central gear box 38 and extends substantially horizontally parallel to the direction A. Its leading splined end is intended to be placed in driven connection with the rear power take-off shaft of an agricultural tractor 50 (Figure 1) or other propelling and operating vehicle by way of a known telescopic transmission shaft 49 having universal joints at its opposite ends. The rear end of the shaft 48 may be used in transmitting drive to the working parts of another agricultural implement, machine or device that may, under some circumstances, be used in combination with the soil cultivating implement and in a position which is at the rear of the soil cultivating implement with respect to the direction A. The frame of the implement has coupling means to enable it to be connected to the three-point lifting device or hitch at the rear of the agricultural tractor 50 or other propelling and operating vehicle, said coupling means comprising a pair of coupling brackets 51 which are secured to the front of the main frame beam 1 at positions spaced by equal distances from the midpoint of that beam 1, the brackets 51 being intended for pivotal connection, in the known manner that is indicated diagrammatically in Figure 1 of the drawings, to the free ends of the lower lifting links of the three-point lifting device or hitch of the agricultural tractor 50 or other propelling and operating vehicle. The coupling means also comprises a pair of forwardly projecting lugs carried at the apex of an arched frame beam 52 whose opposite ends are secured to the top of the main frame beam 1 at equal distances from the midpoint of that frame beam. The forwardly projecting lugs are intended for pivotal connection to the free end of the upper adjustable length lifting link of the same three-point lifting device or hitch whose lower lifting links cooperate with the brackets 51. In order to strengthen the mounting of the arched beam 52, two tie beams 53 symmetrically connect the rear thereof to horizontal plates 54 which are releasably secured by bolts to underlying plates that rigidly interconnect the upper edges of corresponding pairs of support plates 4, these corresponding pairs being pairs which are relatively closely, rather than relatively widely, spaced pairs of the support plates 4.

When the soil cultivating implement that has been described is to be used in performing a cultivating operation, its frame is connected to the three-point lifting device or hitch at the rear of the agricultural tractor 50 or some other suitably equipped propelling and operating vehicle, using the coupling brackets 51 and the lugs carried by the arched beam 52 for this purpose. Before work commences, the transmission ratio in the change-speed gear 42 is, if necessary, altered by interchanging the pinions 43 and 44 or exchanging that pair of pinions for an alternative pair of different sizes with the result that the soil working members 19 will be rotated at a faster or slower rate without having to alter the speed of rotation that is applied to the rotary input shaft 48 from the power take-off shaft of the tractor 50 or alternative vehicle via the telescopic transmission shaft 49 which has universal joints at its opposite ends. The depth to which the soil working members 19 will penetrate into the ground can be controlled by the level setting of the three-point lifting device or hitch of the tractor 50 or alternative vehicle and the required depth of cultivation, the nature and condition of the soil that is to be worked, and the intended speed of forward travel of the implement in the direction A, are all important factors which should be taken into account in deciding upon the particular transmission ratio that should be established in the change-speed gear 42.

As soon as operative travel in the direction A commences, each rotary soil working member 19 will be revolved by the corresponding pair of bevel pinions 9 and 12 in the direction B (Figure 4) which direction, for each soil working member 19, is opposite to the direction of rotation of the or each immediately neighbouring member 19. The longitudinal axes of the shafts 13, which are the axes of rotation of the corresponding soil working members 19, are spaced apart from one another in a single row by distances of substantially 30 centimetres. However, since each individual soil working member 19 has an effective working width of a little more than substantially 30 centimetres, the strips of land, extending in the direction A, that are worked by the individual members 19 will overlap one another to produce a single broad strip of cultivated soil having a width, in the case of the example that is being described, of substantially, but not necessarily exactly, 3 metres. The soil working members 19 are so arranged on their shafts 13 that, despite the fact that each of them has a working width which is a little greater than 30 centimetres, they will not foul one another during rotation in the successively opposite directions B about the axes of the shafts 13. The arrangement in question is clearly visible in Figures 2 and 4 of the drawings. The cultivating members 21 which carry the chisel blades 22 are so effective in displacing, breaking up and crumbling soil that it is possible, in many cases, to produce a satisfactory seed or planting bed by the use of the soil cultivating implement alone without having to undertake a prior ploughing operation.

As briefly mentioned above, each spring 34 acts upon a corresponding one of the pivotal linkages 35 and thus resiliently maintains a respective one of the rotary soil working members 19 in its intended working position in which the upwardly extending axis of rotation thereof will usually be vertically or substantially vertically disposed when dealing with flat horizontal land. However, should one of the rotary soil working members 19 meet a large stone or other hard object, such as an old root, firmly embedded in the soil, and particularly if such a stone, old root or the like should tend to become jammed between two immediately neighbouring rotary soil working members 19, the or each such affected soil working member 19 can deflect rearwardly with respect to the direction A, and upwardly to some extent, about the common longitudinal axis of the aligned rotary shafts 8 as shown by arrows in lower left-hand corner regions of Figures 2 and 3 of the drawings, Figure 2 also showing, in broken lines, the position of one deflected rotary soil working member 19 and the resulting deflected position of the corresponding pivotal linkage 35 and the additionally compressed spring 34. It will be seen from a study of the drawings that, when one of the rotary soil working members 19 is deflected upwardly and rearwardly about the axis of the corresponding shaft 8, an initial small degree of deflection causes a corresponding degree of additional compression of the corresponding spring 34 whereas additional deflection of the soil working member 19, which has a progressively increasing upward component, causes only a very small additional compression of the spring 34. This results from the particular formation of the pivotal linkages 35 and avoids, to a very large extent, the disadvantage of known soil cultivating implements where the resilient force which tends to restore at least one soil working member to an optimum operating position, after deflection due to encountering an obstacle, can vary very greatly in dependence upon the extent of the deflection and upon the point reached in the restoring movement at any particular instant. In the case of one of the pivotal linkages 35, the force of the spring 34 which tends to restore the deflected soil working member 19 to its optimum working position once the obstacle that caused the deflection has been passed or disengaged, does not vary greatly during the restoring movement except during a short closing part of that movement during which the spring 34 concerned lengthens significantly with a corresponding decrease in its restoring effect.

## Claims

1. A cultivating implement which comprises a frame, movable over the ground and carrying a plurality of soil working members (19) that are rotatable about upwardly extending axes, the soil working members (10) being deflectable from their appointed working position, during the operation of the implement, against the action of spring (34) which tend to restore the soil working members (19) to those appointed working positions, pivotally mounted gear boxes (5) being provided containing members of a drive-transmission to the rotary soil working members (19) and means that are engaged by the springs (34), said means being located rearwardly with respect to the intended direction of operative travel of the implement of said gear boxes (5), said means comprising pivotal linkages interconnecting the frame of the implement and the pivotally mounted gearboxes, characterized in that each pivotal linkage (35) comprises three interconnected pivots (24, 26, 29) located at different horizontal levels, the uppermost (29) and lowermost (24) of the three pivots being disposed substantially vertically in register, whilst the intermediate pivot (26) is disposed rearwardly thereof with respect to the intended direction of operative travel of the implement, one of said pivots (29) being carried by the frame of the implement whilst the other pivot (24) is carried by a corresponding one of the pivotably mounted gearboxes (5) and the intermediate pivot (26) of the pivotal linkage is engaged by a corresponding one of the restoring springs (34).

2. An implement as claimed in claim 1, characterized in that the intermediate pivot (26) of the pivotal linkage (35) is located on a displaceable pressure member (27) that is urged lengthwise along a guide (31) by said restoring spring (34).

3. An implement as claimed in claim 2, characterized in that when a rotary soil working member (19) occupies its appointed working position, each guide (31) is substantially horizontally disposed and is pivotally supported relative to the frame of the implement.

4. An implement as claimed in claim 3, characterized in that the pivot (30) about which each guide (31) is displaceable, is located in advance of the pivots of the corresponding pivotal linkage (35) with respect to the intended direction of operative travel of the implement.

5. An implement according to claim 4, characterized in that the intermediate pivot (26) of a pivotal linkage (35) is located at substantially the same horizontal level as is the pivot (30) about which the corresponding guide (31) is turnable.

6. An implement according to any one of claims 2 to 5, characterized in that the restoring spring (34) is a helical compression spring which surrounds the corresponding guide (31) so as to bear between the displaceable pressure member (27) concerned and a stop (33).

## Revendications

1. Machine pour la culture du sol comprenant un chassis pouvant être déplacé sur le terrain et portant une pluralité d'organes (19) de travail du sol pouvant tourner sur des axes s'étendant vers le haut, ces organes (19) de travail du sol pouvant, pendant le fonctionnement de la machine, être écartés de leur position attitrée de travail, contre l'action de ressorts (34) tendant à rappeler ces organes (19) de travail du sol vers leurs positions attitrées de travail, des boîtes d'engrenages (5) pivotantes étant prévues, contenant des éléments d'une transmission d'entraînement de ces organes (19) de travail du sol, et des moyens en prise avec les ressorts (34), ces moyens étant placés à l'arrière des dites boîtes d'engrenages (5) par rapport au sens de marche prévu pour le fonctionnement de la machine, ces moyens comprenant des liaisons articulées reliant le chassis de la machine aux boîtes d'engrenages pivotantes, caractérisée en ce que chaque liaison articulée (35) comprend trois pivots interconnectés (24, 26, 29) situés à des niveaux horizontaux différents, le plus élevé (29) et le plus bas (24) de ces trois pivots étant disposés en alignement sensiblement vertical l'un avec l'auture, tandis que le pivot intermédiaire (26) est disposé à l'arrière de ceux-ci par rapport au sens de marche prévu pour le fonctionnement de la machine, un de ces pivots (29) étant porté par le chassis de la machine, tandis que l'autre pivot (24) est porté par une des boîtes d'engrenages (5) pivotantes qui lui correspond, et en ce que le pivot intermédiaire (26) de l'organe de liaison articulé est en prise avec un des ressorts de rappel (34) qui lui correspond.

2. Machine selon la revendication 1, caractérisée en ce que le pivot intermédiaire (26) de la liaison articulée (35) est situé sur un organe de pression déplaçable (27) qui est sollicité longitudinalement le long d'un guide (31) par ledit ressort de rappel (34).

3. Machine selon la revendication 2, caractérisée en ce que, lorsqu'un organe rotatif (19) de travail du sol occupe se position attitrée de travail, chaque guide (31) est disposé sensiblement horizontalement et est soutenu de manière pivotante par rapport au chassis de la machine.

4. Machine selon la revendication 3, caractérisée en ce que le pivot (30) autour duquel chaque guide (31) est déplaçable est situé en avant de la liaison articulée (35) correspondante par rapport au sens de marche prévu pour le travail de la machine.

5. Machine selon la revendication 4, caractérisée en ce que le pivot intermédiaire (26) d'une liaison articulée (35) est situé sensiblement au même niveau horizontal que le pivot (30) autour duquel peut tourner le guide correspondant (31).

6. Machine selon l'une quelconque des revendications 2 à 5, caractérisée en ce que le ressort de rappel (34) est un ressort hélicoïdal à compression, qui entoure le guide (31) correspondant, de manière à s'appuyer entre l'organe de pression déplaçable (27) concerné et une butée (33).

**Patentansprüche**

1. Kultivator-Gerät mit einem Gestell, das über den Boden zu bewegen ist und eine Anzahl von Bodenbearbeitungsgliedern (19) trägt, die um aufwärts gerichtete Achsen drehbar und während des Betriebes aus ihrer vorgegebenen Arbeitslage gegen die Kraft von Federn (34) auslenkbar sind, welche die Bodenbearbeitungsglieder in die vorgegebene Ausgangslage rückzustellen suchen, und mit schwenkbar angeordneten Getriebegehäusen (5), die Antriebs-Übertragungsglieder für die Bodenbearbeitungsglieder (19) enthalten und an ihrer in bezug auf die Arbeitsrichtung des Gerätes rückwärtigen Seite Mittel aufweisen, an denen die Federn (34) angreifen, und die Gelenkgestänge aufweisen, welche das Gerätegestell und die schwenkbar angeordneten Getriebegehäuse verbinden, dadurch gekennzeichnet, daß jedes Gelenkgestänge (35) drei verbundene Gelenke (24, 26, 29) aufweist, die in unterschiedlichen Höhen angeordnet sind, wobei das oberste (29) und das unterste (24) Gelenk im wesentlichen vertikal übereinanderliegen, während das mittlere Gelenk (26) hinter ihnen liegt, bezogen auf die Fahrtrichtung des Gerätes, und wobei eines der beiden genannten Gelenke (29) am Gerätegestell und das andere Gelenk (24) an dem zugehörigen schwenkbaren Getriebegehäuse (5) angeordnet ist und an dem mittleren Gelenk (26) die zugehörige Rückstellfeder (34) angreift.

2. Gerät nach Anspruch 1, dadurch gekennzeichnet, daß das mittlere Gelenk (26) des Gelenkgestänges (35) an einem beweglichen Druckglied (27) angeordnet ist, das von der Rückstellfeder (34) in Längsrichtung einer Führung (31) beaufschlagt ist.

3. Gerät nach Anspruch 2, dadurch gekennzeichnet, daß jede Führung (31) in der vorgegebenen Arbeitslage des rotierenden Bearbeitungsgliedes (19) im wesentlichen horizontal angeordnet und außerdem in bezug auf das Gerätegestell schwenkbar abgestützt ist.

4. Gerät nach Anspruch 3, dadurch gekennzeichnet, daß das Gelenk (30), mit welchem die Führung (31) beweglich angeordnet ist, in bezug auf die Arbeitsrichtung des Gerätes vor dem zugehörigen Gelenkgestänge (35) angeordnet ist.

5. Gerät nach Anspruch 4, dadurch gekennzeichnet, daß das mittlere Gelenk (26) des Gelenkgestänges (35) im wesentlichen in derselben horizontalen Ebene angeordnet ist wie das Gelenk (30), mit welchem die zugehörige Führung (31) schwenkbar angeordnet ist.

6. Gerät nach einem der Ansprüche 2 bis 5, dadurch gekennzeichnet, daß die Rückstellfeder (34) eine Schraubendruckfeder ist, welche die zugehörige Führung (31) derart umgibt, daß sie zwischen dem beweglichen Druckglied (27) und einem Anschlag (33) abgestützt ist.

FIG.1

FIG.2

FIG.3

3

FIG. 4

FIG.5

0 060 605